# EUROPEAN PATENT APPLICATION

(11) **EP 4 769 099 A1**
(43) Date of publication of application: **01.07.2026**
(21) Application number: 24855851.2
(22) Date of filing: 21.08.2024
(51) Int. Cl.: G06F 3/0483

(54) **INTERFACE INTERACTION METHOD AND APPARATUS, DEVICE AND STORAGE MEDIUM**

(30) Priority: 21.08.2023 CN 202311056088
(71) Applicant: Beijing Zitiao Network Technology Co., Ltd., Beijing 100190 (CN)
(72) Inventor: WANG, Qingyu, Beijing 100028 (CN); FANG, Angxiang, Beijing 100028 (CN)
(74) Representative: Grünecker Patent- und Rechtsanwälte PartG mbB
(86) International application number: PCT/CN2024/113777
(87) International publication number: WO 2025/040129

(57) **Abstract**

Embodiments of the present disclosure relate to a method, an apparatus, a device, and a storage medium of interface interaction. The method proposed herein includes: presenting a playback interface of media content, the playback interface displaying an image of the media content; displaying, in response to receiving the indication information, a target panel in a first region of the playback interface; and presenting, in response to the image including a target object, a first part of an image of the media content in a second region in the playback interface, the first part being determined based on at least one display attribute of the target object in the image. Based on the above way, in the case where the panel is displayed, the embodiments of the present disclosure can adaptively adjust the display of the image according to the display attribute of the target object in the image, thereby improving the user experience.

## Description

This application claims priority to Chinese Invention Patent Application No. 202311056088.4, filed on August 21, 2023, and entitled "METHOD, APPARATUS, DEVICE, AND STORAGE MEDIUM OF INTERFACE INTERACTION", the entirety of which is incorporated herein by reference.

### FIELD

Example embodiments of the present disclosure generally relate to the field of computers, and in particular, to a method, an apparatus, a device, and a computer-readable storage medium of interface interaction.

### BACKGROUND

With the development of computer technologies, the Internet has become an important source for people to obtain various types of content. The live streaming technology, which utilizes the Internet and streaming media technology for content distribution, is becoming increasingly prosperous, and gradually becomes the mainstream mode of expression on the Internet due to its integration of abundant elements such as images, texts, sounds and so on.

### SUMMARY

In a first aspect of the present disclosure, a method of interface interaction is provided. The method includes: presenting a playback interface of media content, the playback interface displaying an image of the media content; displaying, in response to receiving indication information, a target panel in a first region of the playback interface; and presenting, in response to the picture including a target object, a first part of a picture of the media content in a second region of the playback interface, the first part being determined based on at least one display attribute of the target object in the image.

In a second aspect of the present disclosure, an apparatus of interface interaction is provided. The apparatus includes: an interface presenting module configured to present a playback interface of media content, the playback interface displaying an image of the media content; a panel displaying module configured to display, in response to receiving the indication information, a target panel in a first region of the playback interface; and an image presenting module configured to present, in response to the image including a target object, a first part of the image of the media content in a second region of the playback interface, the first part being determined based at least on at least one display attribute of the target object in the image.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium has a computer program stored thereon, and the computer program is executable by a processor to implement the method of the first aspect.

It should be understood that the content described in this Summary is not intended to limit the key features or important features of the embodiments of the present disclosure, nor is it intended to limit the scope of the present disclosure. Other features of the present disclosure will be readily understood from the following description.

### BRIEF DESCRIPTION OF DRAWINGS

The above and other features, advantages, and aspects of various embodiments of the present disclosure will become more apparent with reference to the following detailed description taken in connection with the accompanying drawings. Throughout the drawings, the same or similar reference signs denote the same or similar elements, where:
FIGS. 1A to 1C illustrate example interfaces according to conventional image adjustment schemes;
FIG. 2 illustrates a schematic diagram of an example environment in which the embodiments of the present disclosure may be implemented;
FIGS. 3A and 3B illustrate example interfaces according to some embodiments of the present disclosure;
FIGS. 4A and 4B illustrate example interfaces according to some embodiments of the present disclosure;
FIGS. 5A and 5B illustrate example interfaces according to some embodiments of the present disclosure;
FIGS. 6A and 6B illustrate example interfaces according to some embodiments of the present disclosure;
FIG. 7 illustrates a flowchart of an example process of interface interaction according to some embodiments of the present disclosure;
FIG. 8 illustrates a schematic structural block diagram of an apparatus of interface interaction according to some embodiments of the present disclosure; and
FIG. 9 illustrates a block diagram of an electronic device capable of implementing various embodiments of the present disclosure.

### DETAILED DESCRIPTION

Embodiments of the present disclosure will be described in more detail below with reference to the accompanying drawings. Although certain embodiments of the present disclosure are shown in the drawings, it should be understood that the present disclosure may be implemented in various forms, and should not be construed as being limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the heading of any section/subsection provided in this article is not limiting. Various embodiments are described throughout herein, and any type of embodiments may be included in any section/subsection. Furthermore, the embodiments described in any section/subsection may be combined in any way with any other embodiments in the same section/subsection and/or any other embodiment described in different sections/subsections.

In the description of the embodiments of the present disclosure, the terms "including" and similar expressions should be understood as an open-ended inclusion, this is, "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or the same object. Other explicit and implicit definitions may also be included below.

Embodiments of the present disclosure may relate to data of a user, acquisition and/or use of data, and the like. These aspects all comply with the corresponding laws, regulations and relevant regulations. In the embodiments of the present disclosure, collection, obtaining, processing, processing, forwarding, use, etc. of all data, are performed with the user's knowledge and confirmation. Accordingly, when implementing each embodiment of the present disclosure, users should be informed of the type, scope of use, usage scenarios, etc. that may be involved in the data or information and obtain their authorization through appropriate means in accordance with relevant laws and regulations. The specific notification and/or authorization methods may vary according to actual situations and application scenarios, and the scope of the present disclosure is not limited in this respect.

In the solutions in the specification and the embodiments, in a case that personal information processing is involved, the processing will be carried out on a basis of legality (e.g., with the consent of the subject of the personal information, or when necessary for fulfillment of a contract, and so on), and the processing will be carried out within the scope of stipulations or agreements. The user's refusal to process personal information other than that is necessary for basic functions will not affect the user's usage of the basic functions.

As introduced above, people can use electronic devices to acquire various types of media content. Such media content may include, for example, picture content, video content, live streaming content, and the like.

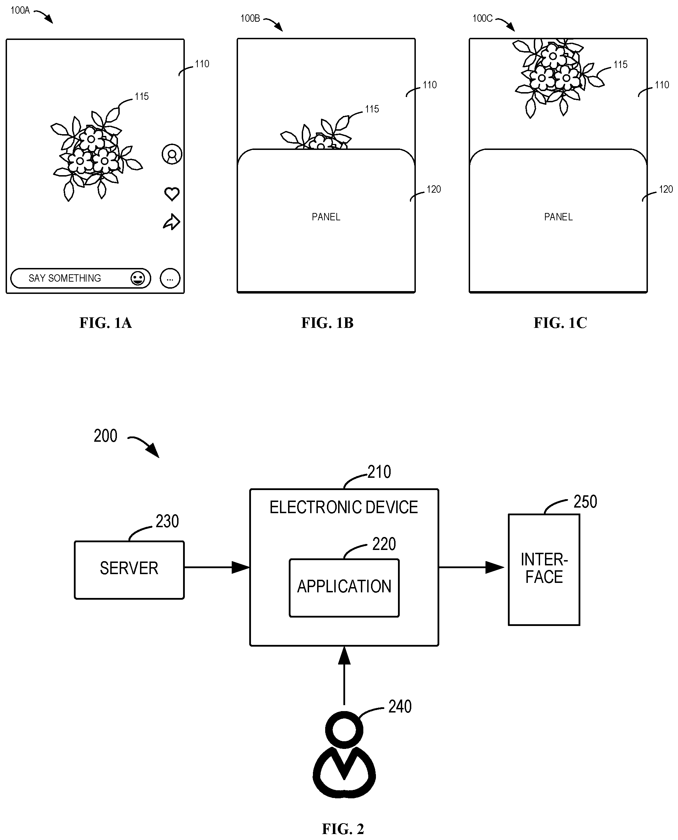

FIG. 1A illustrates an example interface 100A for obtaining media content. Interface 100A may, for example, be used to display an image of media content 110. In some cases, a user may trigger a display of panel 120 through a specific interaction within interface 100A.

In a case where the display of panel 120 is triggered, a region for displaying media content 110 will decrease accordingly. As shown in FIG. 1B, according to some conventional solutions, such a panel 120 may directly cover the image of the media content 110, which may cause object 115 that the user is concerned about in media content 110 to be obstructed by panel 120, thereby affecting the viewing experience of the user.

According to some conventional schemes, as shown in FIG. 1C, the image of media content 110 will be translated accordingly with the trigger of panel 120. For example, the image of media content 110 is translated upward accordingly. However, this may cause object 115 that the user is concerned about to be translated out of the image, thereby affecting the viewing experience of the user.

In view of this, embodiments of the present disclosure provide a solution of interface interaction. According to this solution, a playback interface of the media content is presented. Such a playback interface displays an image of media content. Further, in response to receiving indication information, a target panel is displayed in a first region of the playback interface. If a target object is included in the image, a first part of the image of the media content is presented in a second region of the playback interface, where the first part is determined based at least on at least one display attribute of the target object in the image.

In this way, in a chase where the panel is triggered to be displayed, the embodiments of the present disclosure can adaptively adjust the display of the image according to the display attribute of the target object in the image, thereby improving the user experience.

Various example implementations of this solution are described in detail below with reference to the accompanying drawings.

### Example Environment

FIG. 2 illustrates a schematic diagram of an example environment 200 in which embodiments of the present disclosure can be implemented. As shown in FIG. 2, the example environment 200 may include an electronic device 210.

In this example environment 200, the electronic device 210 may run an application 220 for providing and viewing media content. The application 220 may be any suitable type of application for providing and viewing media content, and examples of which may include, but are not limited to, online video applications, live streaming applications, and so on. The user 240 may interact with the application 220 via the electronic device 210 and/or an attached device thereof. The user 240 may be, for example, the user who provides live streaming content (also referred to as a live streamer), or the user who views the live streaming (also referred to as a viewer).

In the environment 200 of FIG. 2, in a case that the application 220 is active, the electronic device 210 may present a live streaming interface 250 through the application 220.

In some embodiments, the electronic device 210 communicates with the server 230 to enable provision of services to the application 220. The electronic device 210 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game console, a VR (virtual reality)/AR (augmented reality) device, a Personal Communication System (PCS) device, a personal navigation device, a Personal Digital Assistant (PDA), an audio/video player, a digital camera/video camera, a positioning device, a television receiver, a radio broadcast receiver, an e-book device, a gaming device, or any combination of the foregoing, including accessories and peripherals of these devices, or any combination thereof. In some embodiments, the electronic device 210 can also support any type of interface for a user (such as a "wearable" circuit, and the like).

The server 230 may be a standalone physical server, or may be a server cluster or a distributed system that consists of a plurality of physical servers, or may be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms, and so on. The server 230 may include, for example, a computing system/server, such as a mainframe, an edge computing node, a computing device in a cloud environment, and the like. The server 230 may provide background services for the application 220 in the electronic device 210 that supports virtual scenes.

A communication connection may be established between the server 230 and the electronic device 210. The communication connection may be established via a wired or wireless manner. The communication connection may include, but is not limited to, a Bluetooth connection, a mobile network connection, a Universal Serial Bus (USB) connection, a Wireless Fidelity (Wi-Fi) connection, and so on, and the embodiments of the present disclosure are not limited in this aspect. In an embodiment of the present disclosure, the server 230 and the electronic device 210 may implement signaling interaction through a communication connection in between.

It should be understood that the structures and functions of various elements in the environment 200 are described for illustrative purposes only and do not imply any limitation to the scope of the present disclosure.

Some example embodiments of the present disclosure will continue to be described below with reference to the accompanying drawings.

### Example Interface

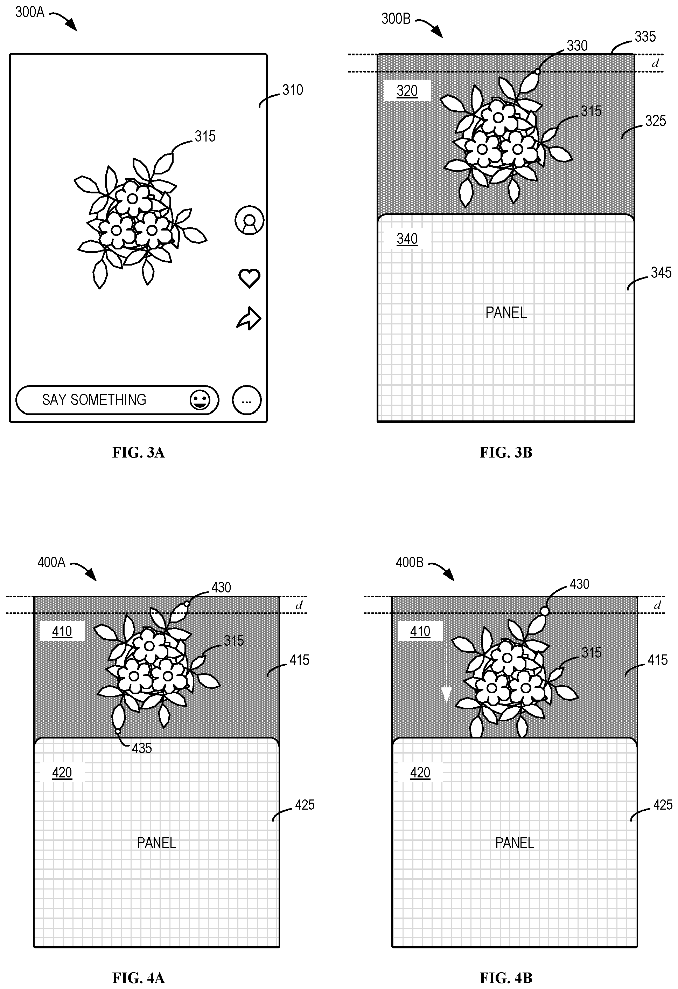

Some example embodiments of the present disclosure will be described below with continued reference to the accompanying drawings. FIG. 3A illustrates a playback interface 300A of media content that may be provided by the electronic device 210, according to some embodiments of the present disclosure.

As shown in FIG. 3A, the playback interface 300A may be configured to play media content 310 to display an image of the media content 310. In some embodiments, such media content 310 may include any suitable media content with corresponding visual content (i.e., an image), examples of which may include picture content, video content, and/or the like. As an example, the playback interface 300A may be configured to display the image of the media content 310 in a full screen mode. As another example, the terminal device 210 may also display the image of the media content 310 in a non-full screen mode.

In some embodiments, such media content 310 may be a video stream of live streaming. Accordingly, the playback interface 300A may be, for example, a live streaming page of a live streaming room.

In some embodiments, the electronic device 210 may trigger the display of the target panel in the playback interface in response to receiving indication information.

In some embodiments, such indication information may be generated based on a preset operation of the user 240. For example, the user 240 may trigger the display of the input panel by clicking an input control; or alternatively, the user 240 may trigger the display of the gift panel by clicking on a gift control.

In still other embodiments, such indication information may also be generated by the electronic device 210 or the server 230. For example, in a live streaming scenario, if the user 240 is a viewer, the electronic device 210 may, for example, receive the indication information generated by the server 230 according to a specific operation of the streamer, and accordingly trigger the display of the corresponding panel.

As shown in FIG. 3B, the electronic device 210 may display a panel 345 in a first region 340 in response to receiving the indication information. Such a panel 345 may include any suitable type of panel, which is not intended to be limited in the present disclosure.

In some embodiments, if the image of the media content 310 includes a specific type of target object, the electronic device 210 may determine an image part 325 (also referred to as a first part) to be displayed in a second region 320 of interface 300B according to at least one display attribute of the target object in the image.

In some embodiments, the electronic device 210 and/or the server 230 may determine whether a specific type of target object is included in the image of media content 310. Such a target object may include, for example, an appropriate object such as a streamer object, a commodity object, and so on. In some examples, such a target object may be a preset object, or may be configured, for example, by a user related to media content 310, for example, the streamer.

In the example in FIG. 3B, the image of the media content 310 may include, for example, target object 315. Further, the electronic device 210 and/or the server 230 may determine at least one display attribute of the target object 315 in the image, and determine a partial image 325 to be displayed in the interface 300B based on the at least one display attribute.

In some embodiments, the at least one display attribute of the target object 315 may include position information of the target object 315 in the image. Such position information may include, for example, a position that describes an edge of the target object 315 in the image (e.g., which may be represented by a curve equation or a plurality of edge position points), a center position of the target object 315 in the image, or a position of one or more key points associated with the target object 315.

Further, the electronic device 210 may determine the partial image 325 according to the position information, such that at least one reference position associated with the target object 315 is included in the image part 325. Such at least one reference position may include, for example, any suitable position associated with the target object 315, e.g., one or more key points associated with the target object 315, one or more edge position points associated with the target object 315, an image center point of the target object 315, and the like. In this way, the embodiments of the present disclosure can ensure that a key part of the target object can be exposed in the adjusted image, which improves the viewing experience of the user.

In the example in FIG. 3B, the electronic device 210 may determine the image part 325 based on a reference position (e.g., a first position 330) associated with the target object, such that the first position 330 is included in the image part 325. The first position 330 corresponds to, for example, the top of the target object 315 in a preset direction of the image.

In some embodiments, the at least one display attribute of the target object 315 includes a ratio of the target object 315 occupying in the image of media content 310. For example, the electronic device 210 and/or the server 230 may determine a display size of the target object 315 according to a region of the target object 315 (for example, by detecting a bounding box), and determine a ratio between the display size and an image size, so as to determine the ratio of the target object 315 in the image. The electronic device 210 may further determine the partial image 325 based on a comparison of the ratio with a preset threshold.

In some embodiments, if the ratio of the target object 315 occupying in the image is less than the preset threshold, the electronic device 210 may determine the partial image 325 based on the position information of the target object 315 in the image. It should be understood that such a preset threshold may be a fixed threshold, or may be variable according to an image size of the media content 310, or may be preconfigured by a related user.

In some examples, such position information may indicate the first position 330 of the target object 315 in the image. The first position 330 corresponds to, for example, the top of the target object 315 in the preset direction of the image.

In some embodiments, the preset direction may correspond to an invocation direction of the panel 345. In the example in FIG. 3B, the preset direction is a vertical upward direction, and the first position 330 may be a top position of the target object 315 in the vertical upward direction.

Further, the electronic device 210 may determine the partial image 325 to be displayed in the second region 320 based on the first position 330, such that the first position 330 is included in the partial image 325.

As such, the embodiments of the present disclosure ensure that the target object can be displayed as completely as possible in the partial image, and thus improving the viewing experience of the user.

Considering that the top of some interfaces usually requires to reserve a certain control region, and in some scenarios, the electronic device 210 may further cause a distance from the first position 330 to an upper edge 335 of the second region 320 in the preset direction to be greater than or equal to the preset distance. In the example in FIG. 3B, for example, the electronic device 210 may always ensure that the top position (i.e., the first position 330) of the target object 315 is at least a preset distance (for example, distance d) away from the top of the second region 320. As a result, the embodiments of the present disclosure can further prevent the target object 315 from being obstructed by other controls, which improves the viewing experience of the user.

In still other embodiments, the electronic device 210 may also enable the target object 315 to be displayed as centrally as possible within the second region, for example.

As shown in FIG. 4A, the electronic device 210 and/or the server 230 may determine a first position 430 and a second position 435 of the target object 315. For example, the first position 430 may correspond to the top of the target object 315 in the preset direction of the image, and the second position 435 may correspond to the bottom of the target object 315 in the preset direction of the image.

Further, the electronic device 210 may determine a candidate part 415 of the image based on the first position 430 and the second position 435 of the target object 315, such that the difference between a distance from the first position 430 to the upper edge of the second region 410 in the preset direction and a distance from the second position 435 to the lower edge of the second region 410 in the preset direction is less than a threshold.

For example, the electronic device 210 may cause the target object 315 to be displayed substantially vertically centered within the second region 410. That is, the electronic device 210 causes the distance from its top position (i.e., the first position 430) to the upper edge of the second region 410 to be equal to the distance from its bottom position (i.e., the second position 435) to the lower edge of the second region 410.

In some embodiments, the electronic device 210 may directly determine the candidate part 415 as a partial image presented in the second region 410.

As a result, the embodiments of the present disclosure can enable the user to more easily view the target object from the displayed partial image, and thus improving the viewing experience of the user.

In some embodiments, in the case that the target object 315 is displayed centrally, its top position may be too close to or beyond the upper edge of the second region. Thus, if the distance from the first position 410 to the upper edge of the second region 410 in the preset direction is greater than or equal to the preset distance, the electronic device 210 may determine the first part of the image based on the candidate part 415. For example, the electronic device 210 may determine the candidate portion 415 as a partial image to be displayed in the second region 410.

Otherwise, if the distance from the first position 410 to the upper edge of the second region 410 in the preset direction is less than the preset distance, the electronic device 210 may further adjust the candidate portion 415. In the example in FIG. 4A, in the case of displaying centrally, the distance from the first position 430 of the target object 315 to the upper edge of the second region 410 is less than the preset distance (for example, distance *d).*

Further, as shown in FIG. 4B, the electronic device 210 may adjust the candidate portion 415 in a direction opposite to the preset direction, for example, a vertical downward direction, such that the distance from the first position 430 to the upper edge of the second region 410 in the preset direction reaches the preset distance (for example, the distance d). In the example in FIG. 4B, the electronic device 210 may adjust the candidate portion 415 downward, so that the distance from the top position (i.e., the first position 430) of the target object 315 to the upper edge of the second region 410 is equal to the preset distance.

Further, the electronic device 210 may determine the first part of an image to be displayed in the second region 410 based on the adjusted candidate part 415. In this way, the embodiments of the present disclosure can further optimize the display of the target object in the remaining part of the image, thereby improving the viewing experience of the user.

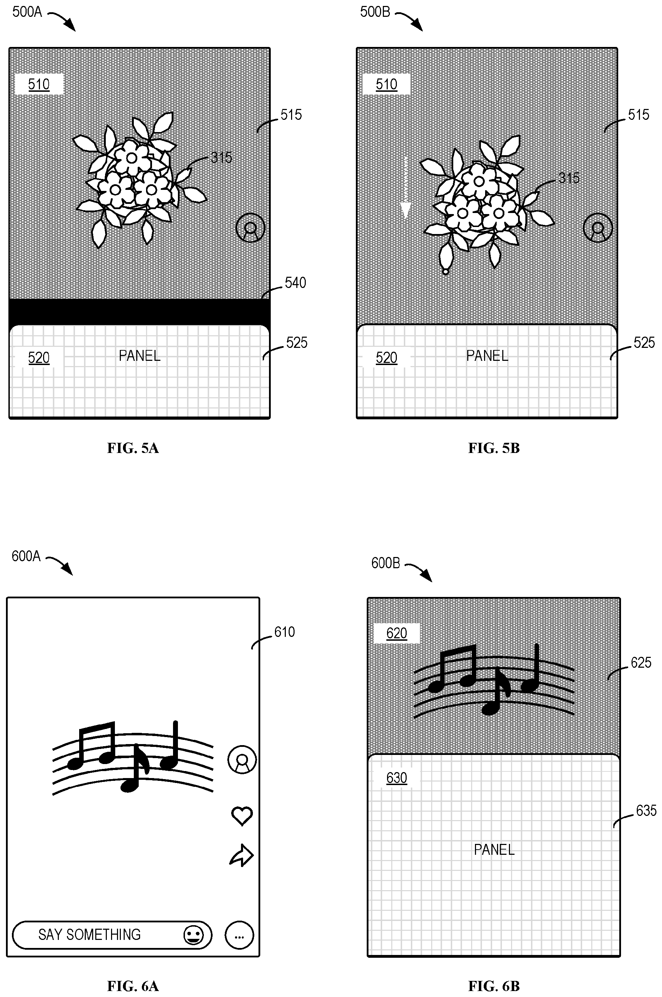

In some other scenarios, in the case of the target object is displayed centrally, the corresponding candidate image part may not completely fill the second region. In the example in FIG. 5A, in a case that the target object 315 is vertically displayed in the center of the second region 510, the candidate portion 515 fails to completely fill the second region 510, and for example, resulting in a blank region 540.

In this case, the electronic device 210 may, for example, further adjust the candidate part 515 to enable it to completely fill the second region 510.

In the example in FIG. 5B, the electronic device 210 may, for example, adjust the candidate part 515 in the direction opposite to the preset direction (e.g., a vertical downward direction) until the adjusted candidate part can completely fill the second region 510. Further, the electronic device 210 may determine the adjusted candidate part 515 as shown in FIG. 5B as the image part displayed in the second region 510.

Otherwise, if the candidate part 515 as shown in FIG. 5A completely fills the second region 510, the electronic device 210 may, for example, directly determine the candidate part 515 as the image part displayed in the second region 510.

Based on the manner discussed above, the embodiments of the present disclosure can perform adaptive adjustment to the image according to the target object, and thus improving the viewing experience of the user.

In some embodiments, if the electronic device 210 and/or the server 230 determines that the ratio of the target object 315 occupying in the image reaches the preset threshold, the electronic device 210 may not perform the adaptive adjustment process as discussed above. For example, the electronic device 210 may control the display of the media content in the second region with reference to the solutions as described in FIG. 1B or FIG. 1C.

In still other embodiments, if the electronic device 210 and/or the server 230 determines that the media content does not include a specific type of the target object, the electronic device 210 may present a second part of the image of the media content in the second region of the playback interface such that a first center position of the second region matches a second center position of the image.

As shown in FIG. 6, the interface 600A may correspond to a playback interface of the media content 610, and for example, the media content 610 may not include a specific target object. Further, as shown in FIG. 6B, in the case that the target panel 635 is triggered to be displayed in the first region 630, the electronic device 210 may enable the media content 610 to be displayed centrally in the second region 620. For example, the electronic device 210 may translate the image of the media content 610 upwards until the center position of the image is aligned with the center position of the second region 620 to determine the partial image 625 to be displayed.

Thus, in the case that the media content is determined to not include the target object, the embodiments of the present disclosure can ensure that the center position of the image is presented in the remaining display region by translating the image, thereby improving the viewing experience of the user.

Additionally, it should be understood that although the embodiments of the present disclosure are described in the above examples in connection with the vertical screen display, the solutions of the present disclosure can apply to other suitable display modes such as landscape display.

In yet other embodiments, for example where the media content is a live video stream, the server 230 may determine whether the image of the media content includes the target object and/or at least one display attribute of the target object in response to the target panel being invoked.

Further, the server 230 may send an indication of whether the target object is included and/or the determined at least one display attribute to the electronic device 210, so that the electronic device 210 determines the image part to be displayed in the remaining display region according to the indication of whether the target object is included and/or the determined at least one display attribute.

In this way, the embodiments of the present disclosure can reduce the local computing overhead of the electronic device and further improve the efficiency of image adjustment.

In some embodiments, the electronic device 210 may determine the image part to be presented in the second region based on at least one display attribute of the target object determined when the target panel is triggered. Therefore, in the subsequent playback process of the video stream, the image presented in the second region may remain stable, and does not change accordingly due to the change of the display attribute of the target object.

### Example Processes

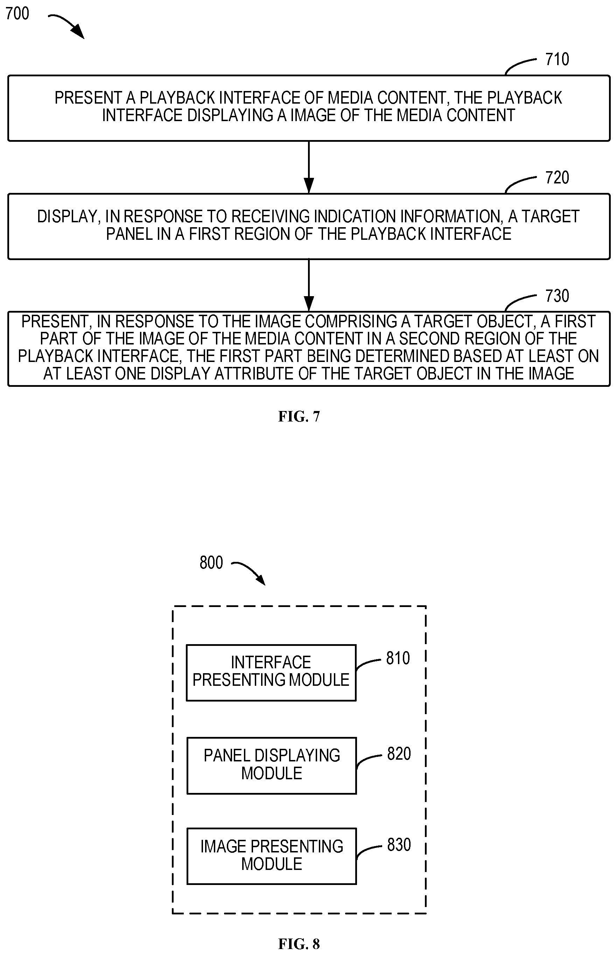

FIG. 7 illustrates a flowchart of an example process 700 of interface interaction according to some embodiments of the present disclosure. The process 700 may be implemented at the electronic device 210. The process 700 is described below with reference to FIG. 2.

As shown in FIG. 7, at block 710, the electronic device 210 presents a playback interface of media content, the playback interface displaying an image of the media content.

At block 720, the electronic device 210 displays, in response to receiving indication information, a target panel in a first region of the playback interface.

At block 730, the electronic device 210 presents, in response to the image including a target object, a first portion of an image of the media content in a second region of the playback interface, the first part being determined based at least on at least one display attribute of the target object in the image.

In some embodiments, the at least one display attribute includes position information of the target object in the image.

In some embodiments, the position information indicates at least one reference position associated with the target object, and the first part is determined such that the at least one reference position is included in the first part.

In some embodiments, the at least one display attribute includes a ratio of the target object occupying in the image, and the process 700 further includes: determining the first part of the image based on a comparison of the ratio with a preset threshold.

In some embodiments, the at least one display attribute further includes position information of the target object in the image, and determining the first part of the image based on the comparison of the display ratio with the preset threshold includes: determining, in response to the ratio being less than the preset threshold, the first part of the image based on the position information.

In some embodiments, the position information indicates a first position of the target object, the first position corresponds to a top of the target object in a preset direction of the image, and determining the first part of the image based on the position information includes: determining the first part based on the first position such that the first position is included in the first part.

In some embodiments, the preset direction corresponds to an invocation direction of the target panel.

In some embodiments, a distance from the first position to an upper edge of the second region in the preset direction is greater than or equal to a preset distance.

In some embodiments, determining the first part based on the first position includes: determining a candidate part of the image based on the first position and a second position of the target object, such that a difference between the distance from the first position to the upper edge of the second region in the preset direction and a distance from the second position to a lower edge of the second region in the preset direction is less than a threshold, wherein the second position corresponds to a bottom of the target object in the preset direction of the image; and determining, in response to the distance from the first position to the upper edge of the second region in the preset direction being greater than or equal to the preset distance, the first part based on the candidate part.

In some embodiments, determining the first part based on the candidate part includes: determining, in response to the candidate part being able to completely fill the second region, the candidate part as the first part; or in response to the candidate part failing to completely fill the second region: adjusting the candidate part in a direction opposite to the preset direction until the adjusted candidate part is able to completely fill the second region; and determining the adjusted candidate part as the first part.

In some embodiments, determining the first part based on the first position further includes: adjusting the candidate part in a direction opposite to the preset direction in response to the distance from the first position to the upper edge of the second region in the preset direction being less than a preset distance, such that the distance from the first position to the upper edge of the second region in the preset direction reaches a preset distance; and determining the first part based on the adjusted candidate part.

In some embodiments, the process 700 further includes: presenting, in response to the image not including the target object, a second part of the image of the media content in the second region of the playback interface, such that the first center position of the second part matches the second center position of the image.

In some embodiments, the playback interface is configured to display an image of the media content in a full screen mode.

In some embodiments, the media content includes a live video stream.

### Example Apparatus and Device

Embodiments of the present disclosure also provide a corresponding apparatus for implementing the above methods or processes. FIG. 8 illustrates a schematic structural block diagram of an apparatus 800 of interface interaction according to some embodiments of the present disclosure. The apparatus 800 may be implemented or included in the electronic device 210. Various modules/components in the apparatus 800 may be implemented by hardware, software, firmware, or any combination thereof.

The apparatus 800 includes an interface presentation module 810 configured to present a playback interface of media content, and the playback interface displaying an image of media content. The apparatus 800 further includes a panel display module 820 configured to display, in response to receiving indication information, a target panel in a first region of the playback interface. The apparatus 800 further includes an image presenting module configured to present, in response to the image including a target object, a first part of the image of the media content in a second region of the playback interface, the first part being determined based at least on at least one display attribute of the target object in the image.

In some embodiments, the at least one display attribute includes position information of the target object in the image.

In some embodiments, the position information indicates at least one reference position associated with the target object, and the first part is determined such that the at least one reference position is included in the first part.

In some embodiments, the at least one display attribute includes a ratio of the target object occupying in the image, and the apparatus 800 further includes a first image determining module configured to determine the first part of the image based on a comparison of the ratio with a preset threshold.

In some embodiments, the at least one display attribute further includes position information of the target object in the image, and the first image determining module is further configured to: determine, in response to the ratio being less than the preset threshold, the first part of the image based on the position information.

In some embodiments, the position information indicates a first position of the target object, the first position corresponds to a top of the target object in a preset direction of the image, and the first image determining module is further configured to: determine the first part based on the first position, such that the first position is included in the first part.

In some embodiments, the preset direction corresponds to an invocation direction of the target panel.

In some embodiments, a distance from the first position to an upper edge of the second region in the preset direction is greater than or equal to a preset distance.

In some embodiments, the first image determining module is further configured to: determine a candidate part of the image based on the first position and the second position of the target object, such that a difference between the distance from the first position to the upper edge of the second region in the preset direction and a distance from the second position to a lower edge of the second region in the preset direction is less than a threshold, wherein the second position corresponds to a bottom of the target object in the preset direction of the image; and determine, in response to the distance from the first position to the upper edge of the second region in the preset direction is greater than or equal to the preset distance, the first part based on the candidate part.

In some embodiments, the first image determining module is further configured to: determine, in response to the candidate part being able to completely fill the second region, the candidate part as the first part; or in response to the candidate part failing to completely fill the second region: adjust the candidate part in a direction opposite to the preset direction until the adjusted candidate part is able to completely fill the second region; and determine the adjusted candidate part as the first part.

In some embodiments, the first image determining module is further configured to: adjust the candidate part in a direction opposite to the preset direction in response to a distance from the first position to the upper edge of the second region in the preset direction being less than a preset distance, such that the distance from the first position to the upper edge of the second region in the preset direction reaches a preset distance; and determine the first part based on the adjusted candidate part.

In some embodiments, the apparatus 800 further includes a second image determining module configured to, present, in response to the image not including the target object, a second part of the image of the media content in the second region of the playback interface, such that the first center position of the second region matches the second center position of the image.

In some embodiments, the playback interface is configured to display an image of the media content in a full screen mode.

In some embodiments, the media content includes a live video stream.

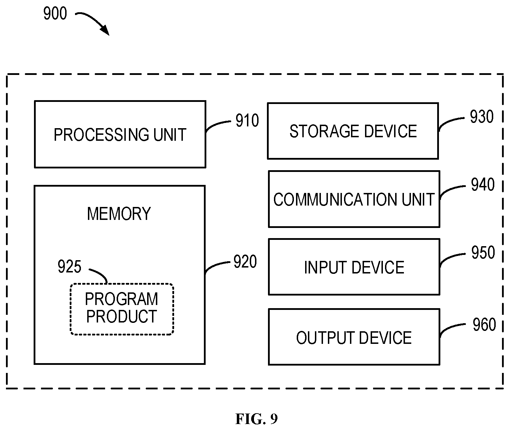

FIG. 9 illustrates a block diagram of an electronic device 900 in which one or more embodiments of the present disclosure may be implemented. It should be understood that the electronic device 900 illustrated in FIG. 9 is merely illustrative and should not constitute any limitation on the functionality and scope of the embodiments described herein. The electronic device 900 shown in FIG. 9 may be configured to implement the electronic device 210 in FIG. 2.

As shown in FIG. 9, the electronic device 900 is in the form of a general-purpose electronic device. Components of the electronic device 900 may include, but are not limited to, one or more processors or processing units 910, a memory 920, a storage device 930, one or more communication units 940, one or more input devices 950, and one or more output devices 960. The processing unit 910 may be an actual or virtual processor and capable of performing various processes according to programs stored in the memory 920. In multiprocessor systems, multiple processing units execute computer-executable instructions in parallel to improve parallel processing capabilities of electronic device 900.

Electronic device 900 typically includes a plurality of computer storage media. Such media may be any available media accessible to the electronic device 900, including, but not limited to, volatile and non-volatile media, removable and non-removable media. The memory 920 may be a volatile memory (e.g., registers, caches, a random access memory (RAM)), a non-volatile memory (e.g., a read-only memory (ROM), an electrically erasable programmable read-only memory (EEPROM), a flash memory), or some combination thereof. Storage device 930 may be a removable or non-removable medium and may include a machine-readable medium, such as a flash drive, a magnetic disk, or any other medium, which may be used to store information and/or data (e.g., training data for training) and may be accessed within electronic device 900.

The electronic device 900 may further include additional removable/non-removable, volatile/non-volatile storage media. Although not shown in FIG. 9, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 920 may include a computer program product 925 having one or more program modules configured to perform various methods or actions of various embodiments of the present disclosure.

The communication unit 940 is configured to communicate with another electronic device over a communication medium. Additionally, the functionality of components of the electronic device 900 may be implemented in a single computing cluster or a plurality of computing machines capable of communicating over a communication connection. Thus, the electronic device 500 may operate in a networked environment using logical connections with one or more other servers, network personal computers (PCs), or another network node.

The input device 950 may be one or more input devices, such as a mouse, a keyboard, a trackball, or the like. The output device 960 may be one or more output devices, such as a display, a speaker, a printer, or the like. The electronic device 900 may also communicate with one or more external devices (not shown) through the communication unit 940 as needed, external devices such as storage devices, display devices, etc., communicate with one or more devices that enable a user to interact with the electronic device 900, or communicate with any device (e.g., a network card, a modem, etc. ) that enables the electronic device 900 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/actions specified in one or more blocks of the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions, when executed on a computer, other programmable data processing apparatus, or other devices implement the functions/actions specified in the flowchart and/or block diagram.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions marked in the blocks may also occur in a different order than marked in the drawings. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above. The foregoing description is illustrative, not exhaustive, and is not limited to the implementations as disclosed. Many modifications and variations will be apparent to those ordinary skilled in the art without departing from the scope and spirit of the various implementations as illustrated. The terminology used herein has been chosen to best explain the principles of various implementations, practical applications, or improvements to techniques in the marketplace, or to enable those skilled in the art to understand the various implementations disclosed herein.

## Claims

1. A method for interface interaction, comprising:
presenting a playback interface of media content, the playback interface displaying an image of the media content;
displaying, in response to receiving indication information, a target panel in a first region of the playback interface; and
the image comprising a target object, presenting a first part of the image of the media content in a second region of the playback interface, the first part being determined based at least on at least one display attribute of the target object in the image.

2. The method of claim 1, wherein the at least one display attribute comprises position information of the target object in the image.

3. The method of claim 2, wherein the position information indicates at least one reference position associated with the target object, and the first part is determined such that the at least one reference position is comprised in the first part.

4. The method of claim 1, wherein the at least one display attribute comprises a ratio of the target object occupying in the image, and the method further comprises:
determining the first part of the image based on a comparison of the ratio with a preset threshold.

5. The method of claim 4, wherein the at least one display attribute further comprises position information of the target object in the image, and determining the first part of the image based on a comparison of the display ratio with the preset threshold comprises:
determining, in response to the ratio being less than the preset threshold, the first part of the image based on the position information.

6. The method of claim 5, wherein the position information indicates a first position of the target object, the first position corresponds to a top of the target object in a preset direction of the image, and determining the first part of the image based on the position information comprises:
determining the first part based on the first position such that the first position is comprised in the first part.

7. The method of claim 5, wherein the preset direction corresponds to an invocation direction of the target panel.

8. The method of claim 5, wherein a distance from the first position to an upper edge of the second region in the preset direction is greater than or equal to a preset distance.

9. The method of claim 8, wherein determining the first part based on the first position comprises:
determining a candidate part of the image based on the first position and a second position of the target object, such that a difference between the distance from the first position to the upper edge of the second region in the preset direction and a distance from the second position to a lower edge of the second region in the preset direction is less than a threshold, wherein the second position corresponds to a bottom of the target object in the preset direction of the image; and
determining, in response to the distance from the first position to the upper edge of the second region in the preset direction being greater than or equal to the preset distance, the first part based on the candidate part.

10. The method of claim 9, wherein determining the first part based on the candidate part comprises:
determining, in response to the candidate part being able to completely fill the second region, the candidate part as the first part; or
in response to the candidate part failing to completely fill the second region:
adjusting the candidate part in adirection opposite to the preset direction until the adjusted candidate part is able to completely fill the second region; and
determining the adjusted candidate part as the first part.

11. The method of claim 9, wherein determining the first part based on the first position further comprises:
adjusting the candidate part in a direction opposite to the preset direction in response to the distance from the first position to the upper edge of the second region in the preset direction being less than the preset distance, such that the distance from the first position to the upper edge of the second region in the preset direction reaches the preset distance; and
determining the first part based on the adjusted candidate part.

12. The method of claim 1, further comprising:
presenting, in response to the image not comprising the target object, a second part of the image of the media content in a second region of the playback interface, such that a first center position of the second region matches a second center position of the image.

13. The method of claim 1, wherein the playback interface is configured to display the image of the media content in a full screen mode.

14. The method of claim 1, wherein the media content comprises a live video stream.

15. An apparatus of interface interaction, comprising:
an interface presenting module configured to present a playback interface of media content, the playback interface displaying an image of the media content;
a panel displaying module configured to display, in response to receiving indication information, a target panel in a first region of the playback interface; and
an image presenting module configured to present, in response to the image comprising a target object, a first part of the image of the media content in a second region of the playback interface, the first part being determined based at least on at least one display attribute of the target object in the image.

16. An electronic device, comprising:
at least one processing unit; and
at least one memory coupled to the at least one processing unit and storing instructions for execution by the at least one processing unit, wherein the instructions, when executed by the at least one processing unit, cause the electronic device to perform the method of any one of claims 1 to 14.

17. A computer-readable storage medium having a computer program stored thereon, wherein the computer program is executable by a processor to implement the method of any one of claims 1 to 14.
